# EUROPÄISCHE PATENTANMELDUNG

(11) **EP 0 790 554 A1**
(43) Veröffentlichungstag der Anmeldung: **20.08.1997**
(21) Anmeldenummer: 97102230.6
(22) Anmeldetag: 12.02.1997
(51) Int. Cl.: G06F 9/445

(54) **Verfahren und Schaltungsanordnung zur Steuerung eines Firmwareladeprozesses**

(30) Priorität: 16.02.1996 DE 19605809
(71) Anmelder: SIEMENS AKTIENGESELLSCHAFT, 80333 München (DE)
(72) Erfinder: Dirks, Armin, Dipl.-Ing., 82362 Weilheim (DE); Gartner, Martin, Dipl.-Ing., Delray Beach, FL 33483 (US)

(57) **Zusammenfassung**

Die Erfindung betrifft ein Verfahren zur Steuerung eines Firmwareladeprozesses, wobei Firmwareprogramme in mindestens zwei Speichern (FM A, FM B, ...) ladbar sind. Jedes in einen Speicher (z.B. FM A) ladbare Firmwareprogramm ist dabei in der Weise ausgestaltet ist, daß ein Laden eines anderen Speichers (z.B. FM B, ...) mit einem anderen Firmwareprogramm ausgelöst werden kann.

Erfindungsgemäß ist vorgesehen, daß ausgelöst durch ein Rücksetzen eines Steuerwerks (MP), das den Firmwareladeprozeß steuert, das Steuerwerk einen der mindestens zwei Speicher (FM A, FM B, ...) aktiviert. Im aktivierten Speicher wird überprüft, ob in diesem ein konsistentes Firmwareprogramm abgespeichert ist. Bei einem positiven Ergebnis der Konsistenzprüfung wird die Durchführung dieses Firmwareprogramms bearbeitet; bei einem negativen Ergebnis der Konsistenzprüfung wird ein zweiter oder ein weiterer Speicher aktiviert und die Durchführung des Firmwareprogramms wird in dem aktivierten Speicher gestartet. Damit lassen sich Firmwareprogrammänderungen ohne manuellen Austausch von Speichern in einfacher Weise ausführen.

## Beschreibung

Die Erfindung betrifft ein Verfahren und eine Schaltungsanordnung zur Steuerung eines Firmwareladeprozesses nach dem Oberbegriff des Anspruches 1 und nach Anspruch 7.

Autonom arbeitende Prozessormodule benötigen ein nichtflüchtiges Urladerprogramm, das z.B. auf der Prozessormodul-Baugruppe gespeichert wird. Dieses Urladerprogramm ermöglicht es, weitere Softwarekomponenten, z.B. von einer Festplatte oder einem Netzwerk nachzuladen. Ein solches bereits auf einer Baugruppe vorhandene Urladerprogramm wird als Firmware bezeichnet.

Derartige Firmware wird in PROM-Speichern oder in EPROM-Speichern gespeichert. Bei einer derartigen Konfiguration ist es beispielsweise bei Leistungsmerkmalerweiterungen oder bei Firmwarefehlern erforderlich, eine neue Firmware zu installieren, wobei dann die PROM- bzw. EPROM-Speicher physikalisch auszuwechseln sind. Ein derartiger manueller Speicheraustausch bzw. Firmwareaustausch ist am Ort des jeweiligen Produkts, also nicht beim Hersteller des Produkts, sondern beim Kunden vorzunehmen und damit zeit- und kostenintensiv.

Weiterhin ist in einer Fernmeldekommunikationsanlage mit der Produktbezeichnung HICOM 300 der Firma Siemens AG eine Baugruppe mit einem EPROM-Speicher und zwei Flash-Speichern sowie einem Prozessor installiert, wobei nach jedem Rücksetzen der Baugruppe (Baugruppenreset) ein Softwareprogramm in dem EPROM-Speicher gestartet wird, welches zunächst prüft, ob sich in einem der beiden Flash-Speicher ein konsistentes Programm befindet. Bei der Erstinbetriebnahme der Baugruppe lädt der EPROM-Urlader einen auf der Festplatte befindlichen Urlader in einen der Flash-Speicher. Bei einem positiven Konsistenzprüfungsergebnis wird dieses im Flash-Speicherprogramm gestartet; bei einem negativen Prüfungsergebnis wird auf den anderen Flash-Speicher zugegriffen und das dort geladene Programm gestartet. Die Programme in beiden Flash-Speichern sind in der Weise ausgestaltet, daß ein Laden des jeweils anderen Flash-Speichers mit einem neuen Programm veranlaßt werden kann. Der in der Baugruppe der bekannten Fernmeldekommunikationsanlage vorgesehene EPROM-Speicher enthält ein Programm, wobei ein Teil dieses Programms dazu dient, nach einem Baugruppenreset die Auswahl des einen oder des anderen Flash-Speichers vorzunehmen. Der EPROM-Speicher ist manuell auszuwechseln, wenn z.B. die Schnittstelle zwischen Prozessor und einem Speichermedium geändert wird, auf welchem die von dem Prozessor zu bearbeitende Software (Urlader, Betriebssystem und Applikationen) abgespeichert ist.

Ausgehend von diesem Stand der Technik liegt der Erfindung die Aufgabe zugrunde, ein Verfahren und eine Schaltungsanordnung der eingangs genannten Art anzugeben, welche Firmwareladeprozesse vereinfachen.

Diese Aufgabe wird erfindungsgemäß durch ein Verfahren und durch eine Schaltungsanordnung gelöst, die in den Patentansprüchen definiert sind.

Die Erfindung ist mit einer Mehrzahl von Vorteilen verbunden. Bei Erweiterungen von z.B. vermittlungstechnischen Leistungsmerkmalen, die von dem Steuerwerk der erfindungsgemäßen Schaltungsanordnung zu realisieren sind, bei Änderungen von Schnittstellenprotokollen oder bei z.B. sporadischen Fehlern einer Firmware, welche nur bei bestimmten Betriebsbedingungen auftreten, ist es nicht mehr erforderlich, Speicher physikalisch bzw. manuell auszutauschen.

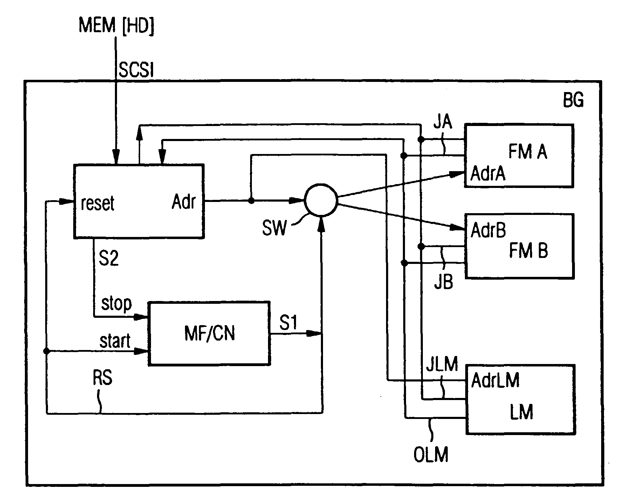

Eine aktualisierte Firmwareprogrammversion kann in einfacher Weise von z.B einem externen Speicher (vgl. MEM in der Figur) in die erfindungsgemäß vorgesehenen Firmwareprogramm-Speicher (FMA, FM B, FM X in der Figur) nachgeladen werden. Der externe Speicher kann beispielsweise nicht beim Kunden, sondern beim Hersteller angeordnet sein, so daß sich verglichen mit dem manuellen Firmware-Speicheraustausch erfindungsgemäß der Firmwareaustausch bzw. eine Firmwareaktualisierung kurzfristig, in relativ kurzer Zeit und zu relativ geringen Kosten abwickeln läßt. Der externe Speicher kann auch beim Kunden angeordnet sein und mittels gängiger fernbetriebstechnischer Übertragungsmaßnahmen mit aktualisierten Firmwareprogrammen geladen werden.

Bei allen Rücksetzvorgängen der in einer Baugruppe angeordneten erfindungsgemäßen Schaltungsanordnung wird jeweils auf einen Speicher zugegriffen, der mit großer Wahrscheinlichkeit einen konsistenten Code enthält, d.h. einen Code, der mit der auf dem (baugruppenexternen) Speichermedium abgespeicherten Software kompatibel ist.

Erfindungsgemäß sind (mindestens) zwei Firmwareprogramm-Speicher vorgesehen, wobei nach einem Firmware-Nachladevorgang der nachgeladene Speicher aktiviert wird, wobei der andere Firmwarespeicher aber für eine Reaktivierung erhalten bleibt.

Der im vorstehend beschriebenen Stand der Technik vorgesehene EPROM-Speicher entfällt. Ebenso entfällt die Notwendigkeit, Speicher physikalisch auszutauschen.

Die Erfindung wird nun anhand der Zeichnung beschrieben.

Diese zeigt ein Ausführungsbeispiel einer erfindungsgemäßen Schaltungsanordnung auf einer Baugruppe BG mit einem Steuerwerk MP, mit einer Umschalteinrichtung SW, einem ersten Speicher FM A, einem zweiten Speicher FM B einem örtlichen Speicher (local memory) LM sowie aus einer monostabilen Kippstufe MF.

Anstelle von zwei in der Figur dargestellten Speichern FM A, FM B kann auch eine Mehrzahl von Speichern (... FM X) vorgesehen sein. Erfindungsgemäß dient jeder Speicher FM A, FM B, FM X der Aufnahme eines Firmwarecodes (Firmwareprogramm).

Z.B wird der Speicher FM A bereits vom Hersteller der Baugruppe mit einem ersten Urladerprogramm geladen. Das Urladerprogramm (Bootstrap-Programm) ist das Programm, das jeder Prozessor (Steuerwerk) zumindest nach Anlegen der Betriebsspannung als erstes Programm bearbeitet.

Danach ist sowohl dieser Speicher FM A sowie der zweite Speicher FM B und jeder weitere Speicher FM X mit einem zweiten und weiteren Urladerprogrammen ladbar bzw. nachladbar. Diese Urladerprogramme dienen dazu, ein Betriebssystem und Anwenderprogramme (Applikationen), welche vor dem eigentlichen Ladevorgang auf einem beispielsweise baugruppenexternen Speichermedium MEM (z.B. Harddisk HD) gespeichert sind, flüchtig in den örtlichen Speicher LM zu laden. Bestandteil des jeweiligen Urladerprogramms ist auch ein Programmteil, der den Firmwareladeprozeß steuert.

Zwischen dem Steuerwerk MP und dem (baugruppenexternen) Speichermedium MEM kann z.B. eine SCSI-Schnittstelle vorgesehen sein.

Das jeweilige in jedem Speicher FM A, FM B, FM X gespeicherte Firmewareprogramm ist in der Weise ausgestaltet, daß ein Laden bzw. Nachladen des jeweils anderen Flash-Speichers mit einem neuen Firmwareprogramm veranlaßt werden kann.

Die Speicher FM A und FM B sind zwei logisch voneinander unabhängige (Flash-) Speicher bzw. (Flash-) Speicherblöcke. Ein Flash-Speicher bzw. -Speicherblock ist durch einen Befehl bzw. eine Befehlsfolge nichtflüchtig ladbar und durch einen Befehl löschbar.

Die in der Figur dargestellte Schaltungsansordnung weist eine monostabile Kippstufe MF (Monoflop) auf, die zwei Eingänge ("start", "stop") sowie einen Ausgang hat. Ein erster Eingang, der in der Figur mit "start" bezeichnet ist, ist einerseits mit dem Ausgang der Kippstufe MF und andererseits mit einem Rücksetz-Eingang "Reset" des Steuerwerks MP verbunden. Ein zweiter Eingang der Kippstufe, der in der Figur mit "Stop" bezeichnet ist, ist mit einem Ausgang des Steuerwerks MP verbunden, wobei über diesen Ausgang des Steuerwerks MP ein ("zweites") Signal S2 abgegeben wird, durch das die monostabile Kippstufe MF in ihrem aktuellen Schaltzustand bis zum Eintreffen eines weiteren ("ersten") Signals S1 gehalten wird. Dieses Signal S1 löst jeweils einen Rücksetzvorgang aus.

Das Steuerwerk MP, das insbesondere als Mikroprozessor ausgebildet ist, kann z.B. durch Anlegen der Betriebsspannung ("POWER ON"), durch Betätigung einer Resettaste (Kaltstart), durch eine Laufzeitüberwachungsschaltung (watch dog) oder durch die Kippstufe MF zurückgesetzt werden. Insbesondere wird das Steuerwerk MP unmittelbar zeitlich abgestimmt mit dem Ladevorgang, insbesondere nach Abschluß eines Ladevorgangs, bei welchem ein neues Firmwareprogramm von dem Speicher MEM in einen der Speicher FM A, FM B, oder FM X geladen wurde, zurückgesetzt.

Eine Rücksetzleitung RS, die den Ausgang der Kippstufe MF mit ihrem ersten Eingang "start" und mit dem Steuerwerk-Eingang "reset" verbindet, führt weiterhin auf die Umschalteinrichtung SW, die in Abhängigkeit des ersten Signals S1 mittels Addreßmapping aus der Rücksetzadresse des Steuerwerks MP ein aktuelle anzusteuernde Adresse des Speichers FM A, FM B oder FM X bildet.

Die Haltezeit der monostabilen Kippstufe MF ist größer als die Zeit, die das Steuerwerk MP für die Durchführung der noch zu beschreibenden Konsistenzprüfung (Prüfung, ob geladenes Firmwareprogramm konsistent ist) benötigt. Die für die Durchführung der Konsistenzprüfung benötigte Zeit ist also kleiner als die Haltezeit von MF. Andernfalls könnte das Steuerwerk während der Durchführung einer Konsistenzprüfung zurückgesetzt werden, was zu einem sogenannten Deadlock-Zustand führen könnte, in dem die Baugruppe funktionell außer Betrieb ist.

Anstelle der monostabilen Kippstufe MF kann beispielsweise ein hardwaregesteuerter Zählgenerator CN vorgesehen sein, der in derselben Weise mit den Signalen S1 und S2 ansteuerbar ist und dieselben Funktionen wie die Kippstufe realisiert.

In den flüchtigen, örtlichen Speicher LM (z.B. ein DRAM) wird die ursprünglich auf dem baugruppenexternen Speichermedium MEM gespeicherte Software (Betriebssystem und Applikationen) geladen. Das in den Speichern FM A, FM B geladene Urladerprogramm dient dazu, diesen Ladevorgang von MEM nach LM zu steuern. Über den Adresseneingang AdrLM wird dem Speicher LM vom Steuerwerk MP mitgeteilt, unter welchen Adressen Daten geschrieben (über Eingang ILM) bzw. gelesen (über Ausgang OLM) werden.

Die in der Figur dargestellte Hardware-Konfiguration realisiert also folgende Funktionen, die auch durch andere Hardware-Funktionen und entsprechende programmtechnische Konfigurationen realisierbar sind:

Die monostabile Kippstufe MF gibt einen Impuls ("erstes Signal S1") auf die Rücksetzleitung RS. Der von der monostabilen Kippstufe MF auf die Leitung RS abgegebene Impuls S1 bewirkt einen Neustart der monostabilen Kippstufe MF (über den Eingang "start"), ein Rücksetzen des Steuerwerks MP (über den Eingang "reset") und ein Umschalten auf den nach dem Rücksetzen des Steuerwerks aktivierten Speichers FM A bzw. FM B (FM X). Die in diesen Speichern abgespeicherten Firmwareprogramme sind in der Weise ausgestaltet, daß ein Laden eines anderen Speichers mit einem Firmwareprogramm ausgelöst werden kann. Die Speicher FM A und FM B weisen Dateneingänge IA bzw. IB und Datenausgänge OA bzw. OB auf.

Die Dateneingänge IA, IB sind mit dem Steuerwerk MP verbunden und dienen dazu, Daten von dem Speicher MEM über die Schnittstelle SCSI und das Steuerwerk MP in den jeweiligen Speicher zu laden. Diese Daten repräsentieren jeweils ein Urladerprogramm. Das in einen der Speicher FM A, FM B zu ladende Urladerprogramm wird also zunächst in den baugruppenexternen Speicher MEM - z.B. auch fernbetriebstechnisch - eingespeichert, auf dem auch - wie bereits beschrieben - vom Steuerwerk MP zu bearbeitende Betriebssystem- und Anwenderprogramme abgespeichert werden können.

Die Datenausgänge OA, OB sind ebenfalls mit dem Steuerwerk MP verbunden und dienen dazu, Befehlsfolgen eines Urladerprogramms dem Steuerwerk MP für eine Abarbeitung (Steuerung des Firmwareladeprozesses) zu übergeben.

Über Adresseingänge AdrA, AdrB der Speicher FM A, FM B übergibt das Steuerwerk MP Adressen, unter denen es Daten lesen (über die Datenausgänge OA, OB) bzw. schreiben (über IA, IB) will.

Zwischen Steuerwerk MP und den Adresseingängen AdrA, AdrB der Speicher FM A, FM B ist die Umschalteinrichtung SW angeordnet, die entscheidet, ob die vom Steuerwerk gelieferten Adressen an den Speicher FM A, FM B , FM X mittels Addressmapping weitergeleitet werden.

Bei dem erfindungsgemäßen Verfahren zur Steuerung eines Firmwareladeprozesses ist vorgesehen, daß Firmwareprogramme in mindestens zwei Speicher FM A, FM B, ... ladbar sind. Jedes in einen Speicher (z.B. FM A) ladbare Firmwareprogramm ist in der Weise ausgestaltet, daß ein Laden eines anderen Speichers (z.B. FM B, ...) mit einem Firmwareprogramm ausgelöst werden kann.

Wie bereits beschrieben, wird z.B. der Speicher FM A bereits vom Hersteller der Baugruppe BG mit einem ersten Urladerprogramm geladen.

Das Steuerwerk MP greift bei Inbetriebnahme der Baugruppe z.B. auf den Speicher FM A zu, in dem das erste Urladerprogramm geladen ist, ruft Programmteile (Befehlsfolgen) ab und arbeitet diese ab. Das Urladerprogramm dient u.a. der Steuerung eines Ladevorgangs, mit dem ein Betriebssystemprogramm und Anwenderprogramme von dem baugruppenexternen Speicher MEM in den lokalen Speicher LM geladen werden. Das Steuerwerk MP führt eine Konsistenzüberprüfung dieses ersten Urladerprogramms durch. Ergibt diese Prüfung ein positives Ergebnis, greift das Steuerwerk MP bis auf weiteres auf den Speicher FM A zu.

Es wird nun davon ausgegangen, daß ein in der Weise geändertes Protokoll der Schnittstelle SCSI implementiert wird, daß sich bei einem weiteren Zugriff des Steuerwerks MP auf den Speicher FM A und bei einer Konsistenzprüfung ein negatives Prüfungsergebnis ergibt, oder daß ein sporadischer Software-Fehler im Urlader vorliegt.

Das negative Ergebnis der Konsistenzprüfung bewirkt, daß kein Signal S2 vom Steuerwerk MP an die Kippstufe MF abgegeben wird. Damit bildet die Kippstufe MF an ihrem Ausgang ein Signal S1, das dem reset-Eingang des Steuerwerks MP zugeführt wird und so das Rücksetzen des Steuerwerks bewirkt. Außerdem wird, wie bereits beschrieben, das Signal S1 dem start-Eingang der Kippstufe MF und der Umschalteeinrichtung SW zugeführt.

Damit wird das Nachladen eines zweiten Urladerprogramms von dem baugruppenexternen Speicher MEM, welches dort im Zusammenhang mit der Implementierung des geänderten Schnittstellenprotokolls oder der Behebung des sporadischen Fehlers abgespeichert wird, über die Schnittstelle SCSI in den Speicher FM B ausgelöst. Das Steuerwerk MP erkennt den Abschluß dieses Nachladevorgangs und setzt sich zurück. Es greift nun auf den Speicher FM B zu, also auf den Speicher, in den das neue Firmwareprogramm geladen worden ist, ruft Programmteile (Befehlsfolgen) ab und arbeitet diese ab. Auch das zweite Urladerprogramm dient u.a. der Steuerung eines Ladevorgangs, mit dem ein Betriebssystemprogramm und Anwenderprogramme von dem baugruppenexternen Speicher MEM in den lokalen Speicher LM geladen werden. Das Steuerwerk MP führt eine Konsistenzüberprüfung dieses zweiten Urladerprogramms durch. Ergibt diese Prüfung ein positives Ergebnis, greift das Steuerwerk MP bis auf weiteres auf den Speicher FM B zu.

Ausgelöst durch das Rücksetzen des Steuerwerks MP, das den Firmwareladeprozess steuert, aktiviert das Steuerwerk MP, - im dargestellten Ausführungsbeispiel über die Umschalteinrichtung SW - also einen der mindestens zwei Speicher FM A, FM B und prüft im aktivierten Speicher, ob in diesem Speicher ein konsistentes Firmwareprogramm abgespeichert ist.

Konsistent ist z.B. ein Firmwareprogramm, das mit der auf dem (baugruppenexternen) Speicher MEM gespeicherten Software und der Schnittstelle SCSI zwischen Prozessor und Speicher MEM kompatibel ist.

Wie bereits beschrieben, wird bei einem positiven Ergebnis dieser Überprüfung (Konsistenzprüfung), wenn also im Speicher ein konsistentes Firmwareprogramm geladen ist, dieses Firmwareprogramms, mit welchem bereits die Konsistenzprüfung durchgeführt wurde, weiterbearbeitet.

Zugleich wird bei einem positiven Ergebnis der Konsistenzprüfung das Steuerwerk MP veranlaßt, an seinem Ausgang ein Signal S2 auszugeben, das dem Eingang "stop" der Kippstufe MF zugeführt wird, die damit ihren aktuellen Schaltzustand beibehält, bis ein Signal S1 ihrem Eingang "start" zugeführt wird.

Bei einem negativen Ergebnis der Überprüfung (es befindet sich kein konsistentes Firmwareprogramm oder kein ablauffähiger Code im ersten Speicher FM A) wird der betreffende Speicher deaktiviert und ein anderer Speicher aktiviert. Dies geschieht dadurch, daß das Steuerwerk MP kein Signal S2 an die Kippstufe MF abgibt, diese also ihren Schaltzustand (Halten) ändert. Schließlich wird die Durchführung des Firmwareprogramms gestartet, das in dem nun aktivierten Speicher geladenen ist.

Ausgelöst durch ein Rücksetzen des Steuerwerks MP steuert das Steuerwerk MP die Umschalteinrichtung SW an, die einen der mindestens zwei Speicher FM A, FM B, aktiviert.

Der jeweils zu aktivierende Speicher kann mittels Addressmapping adressiert werden. Addressmapping bezeichnet das hardwaremäßige Verschieben bzw. Plazieren von ganzen Speicherbereichen an unterschiedliche Adreßbereiche. Beispielsweise liegt in Abhängigkeit von der Umschalteinrichtung SW mal der Speicher FM A, mal der Speicher FM B direkt auf der Rücksetzadresse des Steuerwerks MP. Damit startet das Steuerwerk in Abhängigkeit des Schalters SW nach einem Rücksetzen (reset) entweder das Firmwareprogramm aus dem Speicher FM A oder das Firmwareprogramm aus dem Speicher FM B unter der Rücksetzadresse (z.B. FFFF0H).

Die Rücksetzadresse des Steuerwerks MP ist fest vorgegeben; sie bezeichnet die Programmadresse, die das Steuerwerk unmittelbar nach dem Rücksetzvorgang ansteuert, um das nichtflüchtige Urladerprogramm in dem Speicher FM A, FM B zu starten.

Wie bereits beschrieben, startet die monostabile Kippstufe MF den Rücksetzvorgang und führt dabei das den Rücksetzvorgang bezeichnende erste Signal S1 sowohl dem Eingang "reset" des Steuerwerks MP als auch dem Eingang "start" der monostabilen Kippstufe MF zu. Es wiederholen sich dann die bereits beschriebenen Abläufe.

## Patentansprüche

1. Verfahren zur Steuerung eines Firmwareladeprozesses, wobei Firmwareprogramme in mindestens zwei Speichern (FM A, FM B, ...) ladbar sind, wobei jedes in einen Speicher (z.B. FM A) ladbare Firmwareprogramm in der Weise ausgestaltet ist, daß ein Laden eines anderen Speichers (z.B. FM B, ...) mit einem anderen Firmwareprogramm ausgelöst werden kann,
**dadurch gekennzeichnet**,
daß ausgelöst durch ein Rücksetzen eines Steuerwerks (MP), das den Firmwareladeprozess steuert, das Steuerwerk einen der mindestens zwei Speicher (FM A, FM B, ...) aktiviert, daß im aktivierten Speicher überprüft wird, ob in diesem ein konsistentes Firmwareprogramm abgespeichert ist, daß bei einem positiven Ergebnis der Konsistenzprüfung die Durchführung dieses Firmwareprogramms bearbeitet wird, und daß bei einem negativen Ergebnis der Konsistenzprüfung ein zweiter oder ein weiterer Speicher aktiviert und die Durchführung des Firmwareprogramms in dem aktivierten Speicher gestartet wird.

2. Verfahren nach Anspruch 1, dadurch gekennzeichnet, daß das Steuerwerk (MP) durch das Laden eines Firmwareprogramms in einen der mindestens zwei Speicher (FM A, FM B, FM X) zurückgesetzt wird.

3. Verfahren nach einem der vorstehenden Ansprüche, dadurch gekennzeichnet, daß ausgelöst durch das Rücksetzen des Steuerwerks (MP) das Steuerwerk (MP) eine Umschalteinrichtung (SW) ansteuert, die einen der mindestens zwei Speicher (FM A, FM B, ...) aktiviert.

4. Verfahren nach einem der vorstehenden Ansprüche, dadurch gekennzeichnet, daß das Steuerwerk (MP) denjenigen Speicher (FM A, FM B, FM X) aktiviert, in den ein neues Firmwareprogramm geladen worden ist.

5. Verfahren nach einem der vorstehenden Ansprüche, dadurch gekennzeichnet, daß das Steuerwerk (MP) und/oder die mindestens zwei Speicher (FM A, FM B, FM X) auf einer Baugruppe (BG) angeordnet sind, und daß das Steuerwerk (MP) ein in einen der mindestens zwei Speicher (FM A, FM B, FM X) zu ladendes Firmwareprogramm aus einem baugruppenexternen Speicher (MEM) abruft.

6. Verfahren nach einem der vorstehenden Ansprüche, dadurch gekennzeichnet, daß der zu aktivierende Speicher in Abhängigkeit der Konsistenzprüfung mittels Addreßmapping durch das Steuerwerk (MP) bestimmt wird.

7. Verfahren nach einem der vorstehenden Ansprüche, dadurch gekennzeichnet, daß eine monostabile Kippstufe (MF) den Rücksetzvorgang startet und dabei ein den Rücksetzvorgang bezeichnendes erstes Signal (S1) sowohl einem Eingang (reset) des Steuerwerks (MP) als auch einem Eingang (start) der monostabilen Kippstufe (MF) zuführt.

8. Verfahren nach Anspruch 7, dadurch gekennzeichnet, daß das Steuerwerk (MP) bei einem positiven Ergebnis der Konsistenzprüfung des im aktivierten Speicher geladenen Firmwareprogramms der monostabilen Kippstufe (MF) ein zweites Signal (S2) zuführt, durch das die monostabile Kippstufe (MF) in ihrem aktuellen Schaltzustand bis zum Eintreffen eines weiteren ersten Signals (S1) gehalten wird.

9. Verfahren nach Anspruch 8, dadurch gekennzeichnet, daß die Zeit für die Durchführung der Konsistenzprüfung kleiner ist als die Haltezeit der monostabilen Kippstufe (MF).

10. Schaltungsanordnung zur Durchführung des Verfahrens nach einem der vorstehenden Ansprüche.

11. Schaltungsanordnung nach Anspruch 10, dadurch gekennzeichnet, daß die Schaltungsanordnung mindestens zwei logische Speicher (FM A, FM B, ...) für die Aufnahme eines Firmwareprogramms und ein Steuerwerk (MP) aufweist.

12. Schaltungsanordnung nach Anspruch 10 oder 11, dadurch gekennzeichnet, daß die Schaltungsanordnung eine monostabile Kippstufe (MF) aufweist, die einen ersten Eingang (start) und einen Ausgang aufweist, daß der erste Eingang (start) und der Ausgang der monostabilen Kippstufe (MF) mit einer Rücksetzleitung (RS) verbunden ist, daß die Rücksetzleitung (RS) mit einem Eingang (reset) des Steuerwerks (MP) verbunden ist, und daß die monostabile Kippstufe (MF) einen zweiten Eingang (stop) aufweist, der mit einem Ausgang des Steuerwerks (MP) verbunden ist, über den das zweite Signal (S2) ausgebbar ist, das das Halten des aktuellen Schaltzustandes der monostabilen Kippstufe (MF) bis zum Eintreffen des ersten Signals (S1) auf dem ersten Eingang (start) auslöst.

13. Schaltungsanordnung nach Anspruch 12, dadurch gekennzeichnet, daß die Rücksetzleitung (RS) mit einem Eingang der Umschalteinrichtung (SW) verbunden ist.

14. Schaltungsanordnung nach Anspruch 12 oder 13, dadurch gekennzeichnet, daß anstelle der monostabilen Kippstufe (MF) ein Zählgenerator (CN) vorgesehen ist.
